# EUROPEAN PATENT SPECIFICATION

(11) **EP 1 548 956 B1**
(45) Date of publication and mention of the grant of the patent: **28.06.2006**
(21) Application number: 04027481.3
(22) Date of filing: 19.11.2004
(51) Int. Cl.: H04B 7/005

(54) **Reduction of power consumption and interference power in outer loop transmit power control system**
Verringerung des Leistungsverbrauchs und der Interferenzleistung in einem System mit Sendeleistungsregelung mit äusserer Schleife
Réduction de la consommation de puissance et d'interférence dans un système de commande de puissance d'émission en boucle externe

(30) Priority: 26.11.2003 JP 2003394849
(43) Date of publication of application: 29.06.2005
(73) Proprietor: NEC CORPORATION, Tokyo (JP)
(72) Inventor: Wakizaka, Yoshiki, Tokyo (JP)
(74) Representative: Vossius & Partner

(56) References cited:
- EP-A- 1 041 732
- EP-A- 1 215 926
- US-B1- 6 449 463

## Description

The present invention relates to a transmit power control system, mobile station and transmit power control method, and more particularly, to those used in a mobile communication system based on a CDMA (Code Division Multiple Access) mode.

A transmit power control technology is indispensable for a mobile communication system based on a CDMA mode. A technology of dynamically changing a target value of transmit power control to keep communication quality constant is an outer loop. As a conventional transmit power control system, the technology disclosed in JP-A- 2000-196566 (hereinafter referred to as "Patent Document 1") has a fixed initial value for an outer loop, and therefore a value including a certain degree of margin is set for the initial value assuming a drastically varying propagation environment.

Furthermore, JP-A- 2000-349704 (hereinafter referred to as "Patent Document 2") discloses a technology for changing the width of transmit power control according to a transmit power control bit detection result. Furthermore, JP-A- 2001-148658 (hereinafter referred to as "Patent Document 3") discloses a technology of changing the width of a control step according to the situation of fading which has occurred.

However, the transmit power control system according to Patent Document 1 has a fixed outer loop initial value, and therefore the initial transmit power is higher than an optimum value, involving a problem in aspects of power consumption and interference with user data of other users. Neither Patent Document 2 nor Patent Document 3 discloses means for measuring a reception level and fading pitch based on pilot signals, which is a feature of the present invention.

Patent document EP-A-1 215 926 describes a transmission power controller at the base station where the tarpet SIR is corrected based upon level differences between paths and the fading pitch.

It is an object of the present invention to provide a transmit power control system, mobile station and transmit power control method capable of reducing power consumption and interference power even in a drastically varying propagation environment.

In order to solve the above described problem, the transmit power control system of the present invention provides means for measuring a reception level and fading pitch and means for setting an outer loop initial value of transmit power control in consideration of the reception level weighted with the fading pitch and information on required quality specified from a base station.

This makes it possible to set an outer loop initial value at a high degree of accuracy even in a drastically varying propagation environment and thereby reduce power consumption and reduce interference power in the system.

The above and other objects, features, and advantages of the present invention will become apparent from the following description with reference to the accompanying drawings which illustrate examples of the present invention.
Fig. 1 illustrates the structure of a transmit power control system according to a first embodiment of the present invention;
Fig. 2 is a flow chart showing the procedure of a transmit power control method of the present invention; and
Fig. 3 illustrates the structure of a transmit power control system according to a second embodiment of the present invention.

### 1st Embodiment

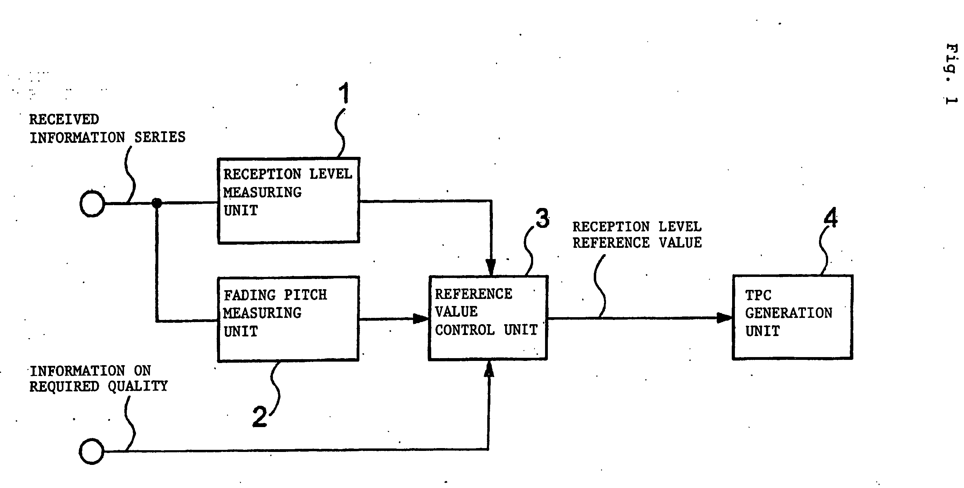

Fig. 1 shows the structure of a transmit power control system according to a first embodiment of the present invention. Fig. 1 shows the structure of a mobile station in a transmit power control system of this embodiment.

According to Fig. 1, the mobile station in the transmit power control system according to this embodiment is provided with a reception level measuring unit 1, a fading pitch measuring unit 2, a reference value control unit 3 and a TPC (Transmit Power Control information) generation unit 4. The reception level measuring unit 1 and reference value control unit 3 are connected to each other and the fading pitch measuring unit 2 and reference value control unit 3 are connected to each other. Furthermore, the reference value control unit 3 and TPC generation unit 4 are connected to each other.

The mobile station shown in Fig. 1 receives pilot signals (received information series) sent all the time from a base station which is not shown. Based on the pilot signals, the reception level measuring unit 1 measures a reception level and the fading pitch measuring unit 2 measures a fading pitch.

The reference value control unit 3 assigns a weight to the reception level measured by the reception level measuring unit 1 according to the fading pitch measured by the fading pitch measuring unit 2 and sets an outer loop initial value (reception level reference value) of transmit power control based on the weighted reception level and information on required quality. This information on required quality is the information specified from the base station when an individual channel is set.

Next, based on the outer loop initial value set by the reference value control unit 3, the TPC generation unit 4 starts generating TPC and transmit power control is thereby started.

The mobile station measures the reception level based on the pilot signals sent all the time from the base station and decides whether the cell in which the mobile station is located is sufficient for the service quality or not. Furthermore, user data such as audio data is sent using an individual channel. A mobile communication system based on a CDMA mode in particular, performs transmit power control over the individual channel.

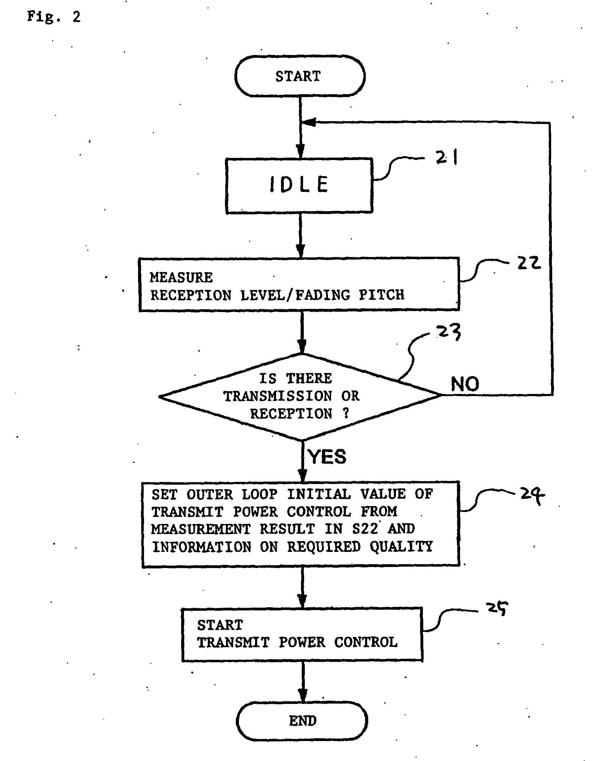

Next, the procedure of the transmit power control method of the present invention will be explained with reference to the flow chart in Fig. 2.

When an IDLE state starts in step 21, the reception level measuring unit 1 and fading pitch measuring unit 2 in the mobile station measure the reception level and fading pitch all the time based on pilot signals in step 22. When a communication using an individual channel is started for transmission or reception of user data in step 23, the reference value control unit 3 sets an outer loop initial value of transmit power control in consideration of the reception level weighted with the fading pitch and information on required quality specified from the base station in step 24. Then, in step 25, the TPC generation unit 4 starts generating TPC based on the outer loop initial value and thereby starts transmit power control. On the other hand, when there is no transmission or reception, etc., of user data in step 23, the process goes back to step 21.

As a result, in this embodiment, it is possible to set an initial value of outer loop control accurately even in a drastically varying propagation environment.

This embodiment has described that the reception level and fading pitch are measured all the time based on pilot signals (see step 22 in Fig. 2). However, the present invention is not limited to this and it is also possible to measure the reception level and fading pitch at predetermined periods.

### 2nd Embodiment

A second embodiment of the present invention differs from the first embodiment in that the reception level is weighted not at a fading pitch but according to information on the cell in which the mobile station is located (e.g., topographic information such as urban and rural areas, etc.).

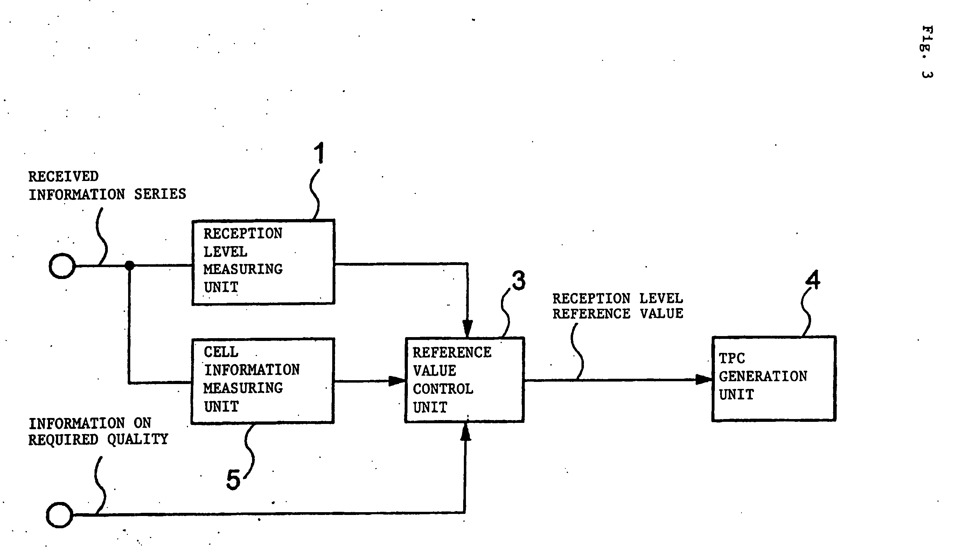

Fig. 3 shows the structure of a transmit power control system according to the second embodiment of the present invention. In Fig. 3, the same components as those in the first embodiment (see Fig. 1) are assigned the same reference numerals and explanations thereof will be omitted.

According to Fig. 3, the only difference from Fig. 1 is that the fading pitch measuring unit 2 is replaced by a cell information measuring unit 5.

That is, the cell information measuring unit 5 measures cell information included in pilot signals sent from the base station. A reference value control unit 3 assigns a weight to the reception level measured by the reception level measuring unit 1 according to the cell information measured by the cell information measuring unit 5 and sets an outer loop initial value of transmit power control based on the weighted reception level and information on required quality. Then, based on the outer loop initial value set by the reference value control unit 3, the TPC generation unit 4 starts generating TPC and transmit power control is thereby started.

For example, when the cell is in a rural area, the reference value control unit 3 assumes that a variation in the propagation environment is not drastic and reduces a margin when setting an outer loop initial value. On the other hand, when the cell is in an urban area, the reference value control unit 3 assumes that a variation in the propagation environment is drastic and increases a margin when setting the outer loop initial value.

By so doing, as in the case of the first embodiment, this embodiment can set an initial value for outer loop control accurately even in a drastically varying propagation environment.

While preferred embodiments of the present invention have been described using specific terms, such description is for illustrative purposes only, and it is to be understood that changes and variations may be made without departing from the scope of the following claims.

## Claims

1. A transmit power control system provided with a base station and a mobile station which generates transmit power control information based on pilot signals sent from said base station, said mobile station comprising: fading pitch measuring means (2) for measuring a fading pitch based on said pilot signals;
reception level measuring means (1) for measuring a reception level based on said pilot signals;
**characterized in that** the mobile station further comprises:
reference value controlling means (3) for setting an outer loop initial value of transmit power control based on the reception level measured by said reception level measuring means, fading pitch measured by said fading pitch measuring means and information on required quality specified from said base station when an individual channel is set.

2. The transmit power control system according to claim 1, wherein said reference value controlling means starts setting an outer loop initial value when a communication is started using the individual channel.

3. The system according to claim 1 or 2, wherein said reception level and said fading pitch are measured at predetermined periods.

4. The system according to claim 1, 2 or 3, wherein said mobile station comprises cell information measuring means for measuring cell information included in said pilot signals instead of said fading pitch measuring means, and
said reference value controlling means sets an outer loop initial value of transmit power control based on the reception level measured by said reception level measuring means, cell information measured by said cell information measuring means and information on required quality specified by said base station when the individual channel is set.

5. The system according to claim 1, 2, 3 or 4, wherein said transmit power control system is used for a mobile communication system based on a CDMA mode.

6. A mobile station which generates transmit power control information based on pilot signals sent from a base station, comprising: fading pitch measuring means (2) for measuring a fading pitch based on said pilot signals;
reception level measuring means for measuring a reception level based on said pilot signals;
**characterized in that** it further comprises:
reference value controlling means (3) for setting an outer loop initial value of transmit power control based on the reception level measured by said reception level measuring means, the fading pitch measured by said fading pitch measuring means and information on required quality specified by said base station when an individual channel is set.

7. The mobile station according to claim 6, wherein said reference value controlling means sets an outer loop initial value when a communication through the individual channel is started.

8. The mobile station according to claim 6 or 7, wherein said reception level and said fading pitch are measured at predetermined periods.

9. The mobile station according to claim 6, 7 or 8, comprising cell information measuring means for measuring cell information included in said pilot signals instead of said fading pitch measuring means, wherein said reference value controlling means sets an outer loop initial value of transmit power control based on the reception level measured by said reception level measuring means, cell information measured by said cell information measuring means and information on required quality specified by said base station when an individual channel is set.

10. The mobile station according to claim 6, 7, 8 or 9, wherein said mobile station is used for a mobile communication system based on a CDMA mode.

11. A transmit power control method for generating transmit power control information at a mobile station based on pilot signals sent from a base station, comprising:
a step of measuring a reception level and fading pitch (22) based on said pilot signals; and
when a communication through an individual channel is started, a step of setting an outer loop initial value of transmit power control (24) in consideration of the reception level weighted with a fading pitch and information on required quality specified by said base station when the individual channel is set.

12. The transmit power control method according to claim 11, wherein said reception level and fading pitch are measured at predetermined periods.

13. The transmit power control method according to claim 11 or 12, wherein said transmit power control method is used for a mobile communication system based on a CDMA mode.

## Patentansprüche

1. Sendeleistungsregelungssystem mit einer Basisstation und einer Mobilstation, die eine Sendeleistungsregelungsinformation basierend auf von der Basisstation übertragenen Pilotsignalen erzeugt, wobei die Mobilstation aufweist:
eine Signalschwundmesseinrichtung (2) zum Messen der Größe eines Signalschwundes basierend auf den Pilotsignalen;
eine Empfangspegelmesseinrichtung (1) zum Messen eines Empfangspegels basierend auf den Pilotsignalen;
**dadurch gekennzeichnet, dass** die Mobilstation ferner aufweist:
eine Referenzwertsteuerungseinrichtung (3) zum Setzen eines Anfangswertes eines äußeren Regelkreises der Sendeleistungsregelung basierend auf dem durch die Empfangspegelmesseinrichtung gemessenen Empfangspegel, der durch die Signalschwundmesseinrichtung gemessenen Größe des Signalschwundes und auf Information über eine erforderliche Qualität, die durch die Basisstation spezifiziert wird, wenn ein individueller Kanal gesetzt wird.

2. System nach Anspruch 1, wobei die Referenzwertsteuerungseinrichtung damit beginnt, einen Anfangswert für den äußeren Regelkreis zu setzen, wenn unter Verwendung des individuellen Kanals eine Kommunikation gestartet wird.

3. System nach Anspruch 1 oder 2, wobei der Empfangspegel und die Größe des Signalschwundes in vorgegebenen Intervallen gemessen werden.

4. System nach Anspruch 1, 2 oder 3, wobei
die Mobilstation an Stelle der Signalschwundmesseinrichtung eine Zelleninformationsmesseinrichtung zum Messen von in den Pilotsignalen enthaltener Zelleninformation aufweist; und
die Referenzwertsteuerungseinrichtung einen Anfangswert des äußeren Regelkreises der Sendeleistungsregelung basierend auf dem durch die Empfangspegelmesseinrichtung gemessenen Empfangspegel, der durch die Zelleninformationsmesseinrichtung gemessenen Zelleninformation und Information über eine erforderliche Qualität setzt, die durch die Basisstation spezifiziert wird, wenn der individuelle Kanal gesetzt wird.

5. System nach Anspruch 1, 2, 3 oder 4, wobei das Sendeleistungsregelungssystem für ein auf einem CDMA-Verfahren basierendes Mobilkommunikationssystem verwendet wird.

6. Mobilstation, die basierend auf von einer Basisstation übertragenen Pilotsignalen Sendeleistungsregelungsinformation erzeugt, mit:
einer Signalschwundmesseinrichtung (2) zum Messen der Größe des Signalschwundes basierend auf den Pilotsignalen;
einer Empfangspegelmesseinrichtung (1) zum Messen eines Empfangspegels basierend auf den Pilotsignalen;
**dadurch gekennzeichnet, dass** die Mobilstation ferner aufweist:
eine Referenzwertsteuerungseinrichtung (3) zum Setzen eines Anfangswertes eines äußeren Regelkreises der Sendeleistungsregelung basierend auf dem durch die Empfangspegelmesseinrichtung gemessenen Empfangspegel, der durch die Signalschwundmesseinrichtung gemessenen Größe des Signalschwundes und Information über eine erforderliche Qualität, die durch die Basisstation spezifiziert wird, wenn ein individueller Kanal gesetzt wird.

7. Mobilstation nach Anspruch 6, wobei die Referenzwertsteuerungseinrichtung damit beginnt, einen Anfangswert für den äußeren Regelkreis zu setzen, wenn eine Kommunikation über den individuellen Kanal gestartet wird.

8. Mobilstation nach Anspruch 6 oder 7, wobei der Empfangspegel und die Größe des Signalschwundes in vorgegebenen Intervallen gemessen werden.

9. Mobilstation nach Anspruch 6, 7 oder 8, wobei
die Mobilstation an Stelle der Signalschwundmesseinrichtung eine Zelleninformationsmesseinrichtung zum Messen von in den Pilotsignalen enthaltener Zelleninformation aufweist; und
die Referenzwertsteuerungseinrichtung einen Anfangswert des äußeren Regelkreises der Sendeleistungsregelung basierend auf dem durch die Empfangspegelmesseinrichtung gemessenen Empfangspegel, der durch die Zelleninformationsmesseinrichtung gemessenen Zelleninformation und Information über eine erforderliche Qualität setzt, die durch die Basisstation spezifiziert wird, wenn der individuelle Kanal festgelegt wird.

10. Mobilstation nach Anspruch 6, 7, 8 oder 9, wobei die Mobilstation für ein auf einem CDMA-Verfahren basierendes Mobilkommunikationssystem verwendet wird.

11. Sendeleistungsregelungsverfahren zum Erzeugen von Sendeleistungsregelungsinformation an einer Mobilstation basierend auf von einer Basisstation übertragenen Pilotsignalen, mit:
einem Schritt (22) zum Messen eines Empfangspegels und der Größe eines Signalschwundes basierend auf den Pilotsignalen; und
einem Schritt (24) zum Setzen eines Anfangswertes eines äußeren Regelkreises der Sendeleistungsregelung zu Beginn einer Kommunikation über einen individuellen Kanal unter Berücksichtigung des mit der Größe des Signalschwundes gewichteten Empfangspegels und von Information über eine erforderliche Qualität, die durch die Basisstation spezifiziert wird, wenn der individuelle Kanal gesetzt wird.

12. Verfahren nach Anspruch 11, wobei der Empfangspegel und die Größe des Signalschwundes in vorgegebenen Intervallen gemessen werden.

13. Verfahren nach Anspruch 11 oder 12, wobei das Sendeleistungsregelungsverfahren für ein auf einem CDMA-Verfahren basierendes Mobilkommunikationssystem verwendet wird.

## Revendications

1. Système de commande de puissance d'émission muni d'une station de base et d'une station mobile qui génère des informations de commande de puissance d'émission sur la base de signaux pilotes transmis à partir de ladite station de base, ladite station mobile comprenant :
des moyens de mesure du pas d'évanouissement (2) pour mesurer un pas d'évanouissement sur la base desdits signaux pilotes ;
des moyens de mesure de niveau de réception (1) pour mesurer un niveau de réception sur la base desdits signaux pilotes ;
**caractérisé en ce que** la station mobile comprend en outre :
des moyens de commande de valeur de référence (3) pour fixer une valeur initiale de boucle externe de commande de puissance d'émission sur la base du niveau de réception mesuré par lesdits moyens de mesure de niveau de réception, du pas d'évanouissement mesurée par lesdits moyens de mesure du pas d'évanouissement et d'informations sur la qualité nécessaire spécifiée par ladite station de base quand un canal individuel est établi.

2. Système de commande de puissance d'émission selon la revendication 1, dans lequel lesdits moyens de commande de valeur de référence commencent à fixer une valeur initiale de boucle externe quand une communication est commencée en utilisant le canal individuel.

3. Système selon la revendication 1 ou 2, dans lequel ledit niveau de réception et ledit pas d'évanouissement sont mesurés à des périodes prédéterminées.

4. Système selon la revendication 1, 2 ou 3, dans lequel ladite station mobile comprend des moyens de mesure d'informations de cellule pour mesurer des informations de cellule comprises dans lesdits signaux pilotes à la place desdits moyens de mesure du pas d'évanouissement, et
lesdits moyens de commande de valeur de référence fixent une valeur initiale de boucle externe de commande de puissance d'émission sur la base du niveau de réception mesuré par lesdits moyens de mesure de niveau de réception, des informations de cellule mesurées par lesdits moyens de mesure d'informations de cellule et d'informations sur la qualité nécessaire spécifiée par ladite station de base quand un canal individuel est établi.

5. Système selon la revendication 1, 2, 3 ou 4, dans lequel ledit système de commande de puissance d'émission est utilisé pour un système de communication mobile basé sur un mode d'accès multiple par différence de code.

6. Station mobile qui génère des informations de commande de puissance d'émission sur la base de signaux pilotes transmis à partir d'une station de base, comprenant :
des moyens de mesure du pas d'évanouissement (2) pour mesurer un pas d'évanouissement sur la base desdits signaux pilotes ;
des moyens de mesure de niveau de réception (1) pour mesurer un niveau de réception sur la base desdits signaux pilotes ;
**caractérisé en ce que** la station mobile comprend en outre :
des moyens de commande de valeur de référence (3) pour fixer une valeur initiale de boucle externe de commande de puissance d'émission sur la base du niveau de réception mesuré par lesdits moyens de mesure de niveau de réception, du pas d'évanouissement mesurée par lesdits moyens de mesure du pas d'évanouissement et d'informations sur la qualité nécessaire spécifiée par ladite station de base quand un canal individuel est établi.

7. Station mobile selon la revendication 6, dans laquelle lesdits moyens de commande de valeur de référence fixent une valeur initiale de boucle externe quand une communication à travers le canal individuel est commencée.

8. Station mobile selon la revendication 6 ou 7, dans laquelle ledit niveau de réception et ledit pas d'évanouissement sont mesurés à des périodes prédéterminées.

9. Station mobile selon la revendication 6, 7 ou 8, comprenant des moyens de mesure d'informations de cellule pour mesurer des informations de cellule comprises dans lesdits signaux pilotes à la place desdits moyens de mesure du pas d'évanouissement, dans laquelle lesdits moyens de commande de valeur de référence fixent une valeur initiale de boucle externe de commande de puissance d'émission sur la base du niveau de réception mesuré par lesdits moyens de mesure de niveau de réception, des informations de cellule mesurées par lesdits moyens de mesure d'informations de cellule et d'informations sur la qualité nécessaire spécifiée par ladite station de base quand un canal individuel est établi.

10. Station mobile selon la revendication 6, 7, 8 ou 9, dans laquelle ladite station mobile est utilisée pour un système de communication mobile basé sur un mode d'accès multiple par différence de code.

11. Procédé de commande de puissance d'émission pour générer des informations de commande de puissance d'émission au niveau d'une station mobile sur la base de signaux pilotes transmis à partir d'une station de base, comprenant :
une étape consistant à mesurer un niveau de réception et un pas d'évanouissement (22) sur la base desdits signaux pilotes ; et
quand une communication à travers un canal individuel est commencée, une étape consistant à fixer une valeur initiale de boucle externe de commande de puissance d'émission (24) en considération du niveau de réception pondéré avec un pas d'évanouissement et d'informations sur la qualité nécessaire spécifiée par ladite station de base quand le canal individuel est établi.

12. Procédé de commande de puissance d'émission selon la revendication 11, dans lequel ledit niveau de réception et ledit pas d'évanouissement sont mesurés à des périodes prédéterminées.

13. Procédé de commande de puissance d'émission selon la revendication 11 ou 12, dans lequel ledit procédé de commande de puissance d'émission est utilisé pour un système de communication mobile basé sur un mode d'accès multiple par différence de code.
